(19) Europäisches Patentamt / European Patent Office / Office européen des brevets

(11) **EP 3 812 085 B1**

(12) **EUROPEAN PATENT SPECIFICATION**

(45) Date of publication and mention
of the grant of the patent:
**03.04.2024 Bulletin 2024/14**

(21) Application number: **19923809.8**

(22) Date of filing: **10.04.2019**

(51) International Patent Classification (IPC):
*B23K 9/025* (2006.01)          *B23K 9/173* (2006.01)
*B23K 9/23* (2006.01)           *B23K 35/02* (2006.01)
*B23K 35/36* (2006.01)          *B23K 35/38* (2006.01)
*C22C 38/00* (2006.01)          *B23K 35/30* (2006.01)
*C22C 38/02* (2006.01)          *C22C 38/06* (2006.01)
*C22C 38/04* (2006.01)          *C22C 38/12* (2006.01)
*C22C 38/14* (2006.01)          *C22C 38/40* (2006.01)
*C22C 38/42* (2006.01)          *C22C 38/08* (2006.01)
*C22C 38/44* (2006.01)          *C22C 38/46* (2006.01)
*C22C 38/48* (2006.01)          *C22C 38/50* (2006.01)
*C22C 38/54* (2006.01)          *B23K 103/04* (2006.01)

(52) Cooperative Patent Classification (CPC):
**B23K 9/025; B23K 9/173; B23K 9/23;**
**B23K 35/0261; B23K 35/3066; B23K 35/383;**
B23K 35/30; B23K 2103/04; C22C 38/005;
C22C 38/02; C22C 38/04; C22C 38/06;
C22C 38/08; C22C 38/12; C22C 38/14;          (Cont.)

(86) International application number:
**PCT/JP2019/015595**

(87) International publication number:
**WO 2020/208735 (15.10.2020 Gazette 2020/42)**

(54) **SOLID WIRE AND METHOD OF MANUFACTURING WELDED JOINT**

MASSIVDRAHT UND VERFAHREN ZUR HERSTELLUNG EINER SCHWEISSVERBINDUNG

FIL RIGIDE ET PROCÉDÉ DE FABRICATION DE JOINT DE SOUDURE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**28.04.2021 Bulletin 2021/17**

(73) Proprietor: **NIPPON STEEL CORPORATION**
**Chiyoda-ku**
**Tokyo 100-8071 (JP)**

(72) Inventor: **SARUWATARI, Suo**
**Tokyo 100-8071 (JP)**

(74) Representative: **Vossius & Partner**
**Patentanwälte Rechtsanwälte mbB**
**Siebertstrasse 3**
**81675 München (DE)**

(56) References cited:
EP-A1- 2 656 964          EP-A1- 2 871 021
WO-A1-2012/086042          WO-A1-2015/068273
JP-A- S5 476 452          JP-A- 2007 296 535
JP-A- 2009 101 414          JP-A- 2009 101 414
JP-A- 2011 056 539          JP-A- 2015 009 247
JP-A- 2015 110 247          JP-A- 2015 110 247
JP-A- 2018 130 749          US-A1- 2010 206 130

(52) Cooperative Patent Classification (CPC): (Cont.)
C22C 38/40; C22C 38/42; C22C 38/44;
C22C 38/46; C22C 38/48; C22C 38/50; C22C 38/54

## Description

[Technical Field of the Invention]

The present invention relates to a solid wire and a method of manufacturing a welded joint.

[Related Art]

In recent years, demand for natural gas, which emits less carbon dioxide than petroleum and coal, has been increased due to the strengthening of carbon dioxide emission regulations by global warming issues, and demand for LNG tank construction has also been increased worldwide. As a steel material used for an LNG tank, a Ni alloy steel for low temperature service containing 6% to 9% of Ni is used to secure toughness at an extremely low temperature of -196°C.

In the welding of a Ni alloy steel for low temperature service, a Ni-based alloy welding material containing 60 to 80 mass% of Ni (hereinafter, referred to as a Ni-based alloy welding material), in which the structure of a weld metal can be made austenitic (face-centered cubic, FCC), is generally used. However, the Ni-based alloy welding material is extremely expensive due to a large amount of Ni contained therein.

Furthermore, since the Ni-based alloy welding material is likely to cause hot-cracking and is poor in the molten metal flow, welding defects such as incomplete fusion are likely to occur. According to the related art, to privent occurring the welding defects, the Ni-based alloy welding material is combined with a welding method for welding with low heat input (for example, manual metal arc welding, submerged arc welding, and TIG welding). Accordingly, welding using the Ni-based alloy welding material has low efficiency. The Ni-based alloy welding material can be said to have problems in both the material cost and the welding cost.

In a case where the Ni content in the welding material is reduced to the same level as a Ni alloy steel for low temperature service, the material cost can be reduced. However, in a case where the Ni content in the weld metal is reduced to about 6 to 9 mass% to be similar to that of the Ni alloy steel for low temperature service, a crystal structure of the weld metal transforms into a body-centered cubic structure (hereinafter, BCC). In the BCC weld metal, in order to secure the low temperature toughness thereof, it is necessary to reduce the oxygen content to an extremely low level. Accordingly, according to the related art, it is necessary for a welding material having the same Ni content as that of the Ni alloy steel for low temperature service to be combined with a welding method in which the oxygen content in a weld metal can be reduced, such as TIG welding. According to non-consumable electrode TIG welding, a sound weld metal is obtained even in a case where a welding material has a small Ni content. However, the TIG welding has low welding efficiency. Accordingly, it was not possible to solve the problem of welding cost even in a case where the Ni content in a welding material is reduced.

In industry, it is expected to develop a welding material which can be applied to a welding method having excellent welding efficiency and makes it possible to manufacture a weld metal having excellent low temperature toughness. Examples of the welding method having excellent welding efficiency include gas shielded arc welding methods such as MIG welding and MAG welding. MIG welding is defined as gas shielded metal arc welding for shielding with an inert gas such as argon or helium, and MAG welding is defined as gas shielded metal arc welding using an active shielding gas such as a carbon dioxide gas or a mixed gas of argon and a carbon dioxide gas (JIS Z 3001: 2008). Gas shielded metal arc welding in which oxygen is contained in a shielding gas is also sometimes referred to as MAG welding. As a shielding gas for MAG welding, for general example, Ar-10% to 30% $CO_2$ (that is, a mixed gas of 10% to 30% by volume of $CO_2$ and a remainder consisting of Ar), 100% $CO_2$, Ar-2% $O_2$, or the like is used, and 2% or greater of $CO_2$ or $O_2$ as an active gas is contained in the gas.

It is advantageous that the shielding gas contains an active gas from the viewpoint of welding cost and from the viewpoint that energy is concentrated by arc thinning to reduce welding defects. However, MAG welding has a disadvantage that oxygen is easily incorporated into the weld metal. According to the related art, it was not easy to weld a Ni alloy steel for low temperature service by combining MAG welding with a welding material required to reduce the oxygen content in the weld metal.

For example, the following wire has been proposed as a welding wire of a steel for extremely low temperature service.

Patent Document 1 discloses a flux-cored wire with an outer cover formed of a Ni-based alloy, containing, in its flux, 4.0 mass% of $TiO_2$, $SiO_2$, and $ZrO_2$ in total with respect to the total mass of the wire, and further containing 0.6 to 1.2 mass% of Mn oxide in terms of $MnO_2$, in which in a case where the amounts of $TiO_2$, $SiO_2$, $ZrO_2$, and $MnO_2$ (converted values) are indicated by $[TiO_2]$, $[SiO_2]$, $[ZrO_2]$, and $[MnO_2]$ by mass%, respectively, $[TiO_2]/[ZrO_2]$ is 2.3 to 3.3, $[SiO_2]/[ZrO_2]$ is 0.9 to 1.5, and $([TiO_2]+[SiO_2]+[ZrO_2])/[MnO_2]$ is 5 to 13. However, the Ni content is 60% to 70% in this wire, and a reduction in the cost of the welding material has not been achieved.

Patent Document 2 discloses a solid wire for TIG welding which contains 0.13 wt% or less of C, has a tensile strength of 760 to 980 N/mm$^2$, and is used for TIG welding of a high tensile strength steel, in which a martensitic transformation start temperature of the fully-deposited metal obtained by the method specified in JIS Z 3111 is equal to or lower than 400°C, 7.5 to 12.0 wt% of Ni is contained with respect to the total weight of the wire, and the composition is regulated such that the C content is equal to or less than 0.10 wt% and the H content is equal to or less than 2 weight ppm. However, in the solid wire disclosed in Patent Document 2, the welding method is limited to TIG welding, and thus the efficiency of welding using the above wire is extremely low.

Patent Document 3 discloses a cored wire for welding of a nickel steel, which includes a steel sheath and a filling element and contains 2% to 15% of fluorine, 8% to 13% of nickel, and iron with respect to the weight of the wire. However, the weld metal obtained by using the wire disclosed in Patent Document 3 has low low temperature toughness (Charpy absorbed energy in an impact test at -196°C). In recent years, a welded portion has been required to have low temperature toughness such that the Charpy absorbed energy in an impact test at -196°C is 50 J or greater, but the wire disclosed in Patent Document 3 cannot achieve the above property. Furthermore, in a case where the cored wire of Patent Document 3 is combined with MAG welding, it is estimated that the amount of spatters is increased and a large number of welding defects occur.

US 2010/206130 A1 discloses a welding solid wire for TIG welding or MIG welding. WO 2015/068273 A1 discloses a flux-cored wire.

Non-Patent Document 1 discloses a technology in which a solid wire made of an iron alloy in which the Ni content is reduced to about 10% is used, and MIG welding with a 100% Ar shielding gas is performed to obtain a weld metal similar to that of TIG welding. In this technology, since the P content and the S content in the wire are extremely reduced, the toughness is secured. However, in the experiments of the inventors, in a case where the welding is performed by the method of Non-Patent Document 1, the arc is irregularly generated, and thus weld bead meandering and a large number of welding defects occur. This problem is particularly severe in a case where MAG welding is combined.

As above, a technology in which a weld metal having sufficient low temperature toughness can be obtained by combining a welding method, which is performed at low welding cost (for example, gas shield arc welding, particularly, MAG welding), with an inexpensive welding material in which the Ni content is reduced to the same level as a 6% to 9% Ni steel has not been realized yet.

[Prior Art Document]

[Patent Document]

[Patent Document 1] Japanese Unexamined Patent Application, First Publication No. 2008-246507
[Patent Document 2] Japanese Unexamined Patent Application, First Publication No. H09-253860
[Patent Document 3] Japanese Unexamined Patent Application, First Publication No. 2008-161932

[Non-Patent Document]

[Non-Patent Document 1] Kazuo Agusa, Masaaki Kosho, et al., KAWASAKI STEEL GIHO, vol. 14, No. 3 (1982), Matching Ferritic Filler MIG Welding of 9% Ni Steel

[Disclosure of the Invention]

[Problems to be Solved by the Invention]

In view of the problems of the related arts described above, an object of the present invention is to provide a solid wire which can achieve a significant reduction in the welding material cost, has excellent welding workability even in a case of being applied to a welding method having excellent welding efficiency, and makes it possible to obtain a weld metal having an excellent tensile strength and excellent low temperature toughness at -196°C, and a method of manufacturing a welded joint using the solid wire.

[Means for Solving the Problem]

The present invention is stated in the claims.

[Effects of the Invention]

With a solid wire according to the present invention, the welding material cost can be significantly reduced by reducing a Ni content to the same level as a Ni alloy steel for low temperature service, and the toughness of a weld metal can be secured even in a case where the solid wire is applied to gas shielded arc welding (for example, MIG welding and MAG welding) having excellent welding efficiency. For example, in a case where a solid wire according to the present invention and a method of manufacturing a welded joint using the solid wire are applied to welding of a Ni alloy steel for low temperature service containing about 5.5% to 9.5% of Ni, which is used for LNG tanks, chemical plants, and the like, a weld metal having excellent low temperature toughness at -196°C is obtained with high efficiency at low cost.

[Brief Description of the Drawings]

    FIG. 1 is a diagram showing a position where a test piece is collected in examples (JIS Z3111: 2005).
    FIG. 2 is a diagram showing an evaluation formula for consistency of a weld bead in the examples.

[Embodiments of the Invention]

A weld metal formed of a Ni alloy steel for low temperature service is required to have low temperature toughness at -196°C, and it is necessary to reduce an oxygen content of the weld metal in order to secure absorbed energy at -196°C. The crystal structure of the weld metal obtained using a solid wire having a Ni content reduced to the same level as a 6% to 9% Ni steel is a BCC structure, and by reducing an oxygen content in the weld metal, brittle fracture is suppressed, and the low temperature toughness of the weld metal is sufficiently improved.

The inventors carried out welding of a Ni alloy steel for low temperature service by gas shielded arc welding using a mixed gas of Ar and an active gas by using a solid wire experimentally prepared by introducing a parameter ($\alpha$) for optimizing the amounts of deoxidizing elements Mn, Al, Ti, and Mg, and Ta in the solid wire having a Ni content reduced to the same level as the Ni alloy steel for low temperature service and by changing the amounts of C, Si, Mn, Ni, Cr, Mo, and V at various ratios.

As a result, the followings were found.

    (i) In a case where the amounts of Mn, Al, Ti, Mg, and Ta are optimized using the value a, the oxygen content of the weld metal can be significantly reduced even by gas shielded arc welding using a mixed gas of Ar and an active gas.
    (ii) In addition to (i) described above, by setting the amounts of C, Si, Mn, Ni, Cr, Mo, and V in a specific range, excellent low temperature toughness at -196°C is obtained.
    (iii) According to the solid wire satisfying the requirements (i) and (ii) described above, gas shielded arc welding can be used, whereby welding efficiency is improved as compared with TIG welding.

The value a is calculated by the following formula. The formula is obtained by subjecting evaluation results of solid wires having various chemical compositions to multiple regression analysis.

$$\alpha = 2 \times [\text{Mn}] + [\text{Al}] + 1.5 \times [\text{Ti}] + [\text{Mg}] + 10 \times [\text{Ta}] ...(\text{Formula a})$$

The present invention has been made as a result of the above studies, and hereinafter, reasons for limiting the technical requirements and preferable aspects of the solid wire according to this embodiment will be sequentially described.

First, the reasons for limiting the amounts of alloy components, metal deoxidizing components contained, and the respective components in the solid wire according to this embodiment will be described.

In the following description of the chemical composition of the solid wire, "%" means "mass%" unless otherwise specified. The solid wire according to this embodiment may have a coating layer on its surface. In this case, distribution of the alloy components of the solid wire is not uniform, but the amount of each of the alloy components of the solid wire is grasped as an average value in the whole solid wire. That is, the amount of each of alloy components to be described below means a component content that is the sum of mass% of each component with respect to the total mass of the solid wire.

(C: 0.003% to 0.080%)

C is an element improving the strength of a weld metal. In order to secure the strength of the weld metal, the solid wire is required to contain 0.003% or greater of C. In order to improve the strength of the weld metal, the lower limit of the C content of the solid wire may be 0.005%, 0.008%, 0.010%, or 0.013%. A weld metal containing 8 % to 16% of Ni has a hard martensitic structure. C has a very large influence on the hardness of martensite, and in a case where the C content of the solid wire is greater than 0.080%, the weld metal is extremely hardened and the toughness is significantly reduced. Accordingly, the upper limit of the C content of the solid wire is 0.080%.

In order to stably secure the toughness of the weld metal, the upper limit of the C content of the solid wire may be 0.075%, 0.070%, 0.065%, 0.060%, 0.055%, or 0.050%.

(Si: 0.0010% to 0.50%)

Si is an element necessary for improving the cleanliness of a weld metal and for suppressing the occurrence of welding defects such as blowholes. In order to obtain these effects, the solid wire is required to contain 0.0010% or greater of Si. In order to further prevent the occurrence of welding defects, the lower limit of the Si content of the solid wire may be 0.0050% or 0.0100%. In a weld metal containing 8 % to 16% of Ni, microsegregation of Si is easily performed. In a case where the Si content of the solid wire is greater than 0.50%, embrittlement markedly occurs in the segregated portion. Accordingly, the upper limit of the Si content of the solid wire is 0.50%. In order to stably secure the toughness of the weld metal, the upper limit of the Si content of the solid wire may be 0.40% or 0.30%.

(Mn: 0.050% to 1.80%)

Mn is a deoxidizing element, and improves the cleanliness of a weld metal. Mn is an element necessary for suppressing the occurrence of hot-cracking due to S by forming MnS in the weld metal and for improving the toughness of the weld metal. In order to obtain the above effect, the solid wire is required to contain 0.050% or greater of Mn. In order to further improve the toughness of the weld metal, the lower limit of the Mn content of the solid wire may be 0.100%, 0.120%, 0.200%, or 0.300%. In a weld metal containing 8% to 16% of Ni, microsegregation of Mn is easily performed. In a case where the Mn content of the solid wire is greater than 1.80%, embrittlement markedly occurs in the segregated portion. Accordingly, the upper limit of the Mn content of the solid wire is 1.80%. In order to stably secure the toughness of the weld metal, the upper limit of the Mn content of the solid wire may be 1.60%, 1.40%, or 1.20%.

(Al: 0.030% to 0.500%)

Al is a deoxidizing element, and is effective in suppressing the occurrence of welding defects such as blowholes and in improving the cleanliness as in cases of Si and Mn. In order to exhibit the above effect, 0.030% or greater of Al is contained in the solid wire. In a case where Al is contained in the solid wire in an amount of greater than 0.500%, Al forms a nitride or an oxide, which impair the toughness of the weld metal. Accordingly, the upper limit of the Al content of the solid wire is 0.500%. In order to sufficiently obtain the effect of improving the toughness of the weld metal, the lower limit of the Al content of the solid wire is 0.031%, 0.033%, 0.035%, 0.040%, 0.045. %, 0.050%, 0.051%, 0.053%, or 0.055%. In order to suppress the formation of an oxide, the upper limit of the Al content of the solid wire may be 0.480%, 0.450%, 0.400%, 0.350%, 0.300%, or 0.200%.

(Ni: 8.0% to 16.0%)

Ni is the only element which can improve the toughness of a weld metal by solid solution toughening (an action of increasing the toughness by solid solution) regardless of the structure and components of the weld metal. In particular, Ni is an essential element for securing the low temperature toughness at -196°C. In order to obtain the above effect, the Ni content of the solid wire is required to be 8.0% or greater. It is not preferable that the Ni content of the solid wire is greater than 16.0% since the above effect is saturated and the welding material cost is increased. In a case where the Ni content of the solid wire is greater than 16.0%, hot-cracking easily occurs, the molten metal flow is poor, and welding defects such as incomplete fusion easily occur. Accordingly, it becomes difficult to apply the solid wire to high efficiency welding such as gas shielded arc welding. Accordingly, the upper limit of the Ni content of the solid wire is 16.0%. The upper limit of the Ni content of the solid wire may be limited to 15.5%, 15.0%, or 14.5%. In order to stably secure the low temperature toughness of the weld metal, the lower limit of the Ni content of the solid wire may be 8.5%, 9.0%, 9.5%, or 10.0%.

(P: 0.0200% or less)

P is an impurity element, and there is a tendency that hot-cracking occurs in a case where P is excessively added. In addition, P deteriorates the toughness of a weld metal. Accordingly, the P content is preferably reduced as much as possible. The P content of the solid wire is 0.0200% or less as a range in which the adverse effect on the toughness of the weld metal is allowable. In order to further improve the toughness of the weld metal, the upper limit of the P content of the solid wire may be 0.0150%, 0.0100%, 0.0080% or 0.0060%. From the viewpoint of securing the toughness of the weld metal, it is not necessary to limit the lower limit of the P content of the solid wire, and the lower limit of the P content is 0%. From the viewpoint of reducing the refining cost, the lower limit of the P content of the solid wire may be 0.0010%, 0.0020%, or 0.0030%.

(S: 0.0100% or less)

S is an impurity element, and there is a tendency that hot-cracking occurs in a case where S is excessively added. In addition, S remarkably deteriorates the toughness of a weld metal. Accordingly, the S content is preferably reduced as much as possible. The S content of the solid wire is 0.0100% or less as a range in which the adverse effect on the toughness of the weld metal is allowable. In order to further improve the toughness of the weld metal, the upper limit of the S content of the solid wire may be 0.0080%, 0.0060%, 0.0040%, or 0.0030%. From the viewpoint of securing the toughness of the weld metal, it is not necessary to limit the lower limit of the S content of the solid wire, and the lower limit of the S content is 0%. From the viewpoint of reducing the refining cost, the lower limit of the S content of the solid wire may be 0.0005%, 0.0010%, or 0.0020%.

(O: 0.050% or less)

O is an impurity and remarkably deteriorates the toughness of a weld metal, whereby the O content is preferably reduced as much as possible. The O content of the solid wire is 0.050% or less as a range in which the adverse effect on the toughness of the weld metal is allowable. In order to further improve the toughness of the weld metal, the upper limit of the O content of the solid wire may be 0.020%, 0.015%, 0.010%, or 0.005%. From the viewpoint of securing the toughness of the weld metal, it is not necessary to limit the lower limit of the O content of the solid wire, and the lower limit of the O content is 0%. From the viewpoint of reducing the refining cost, the lower limit of the O content of the solid wire may be 0.0005%, 0.001%, or 0.002%.

For the purpose to be explained below, the solid wire according to this embodiment may contain, as an optional element, one or more of elements Ta, Cu, Cr, Mo, V, Ti, Nb, B, Mg, and REM. However, since the solid wire according to this embodiment can solve the problems without containing these optional elements, the lower limit of the amount of each of these optional elements is 0%.

(Ta: 0% to 0.1000%)

Ta is a precipitation strengthening element, and has an effect of improving the strength of a weld metal. Ta is an element which can combine with oxygen existing in the high temperature arc to reduce the oxygen content in the weld metal. In a case where the Ta content of the solid wire is greater than 0.1000%, the oxygen content in the weld metal becomes constant, and it is difficult to further reduce the oxygen content. Furthermore, the strength of the weld metal is excessively increased, and the low temperature toughness of the weld metal is impaired. Accordingly, the upper limit of the Ta content of the solid wire is 0.1000%. In order to sufficiently obtain the effect of increasing the strength of the weld metal and the effect of reducing the oxygen content of the weld metal, the lower limit of the Ta content of the solid wire may be 0.0005%, 0.0010%, 0.0015%, 0.0020%, 0.0025%, or 0.0030%. In order to further improve the low temperature toughness of the weld metal, the upper limit of the Ta content of the solid wire may be 0.090%, 0.080%, 0.070%, 0.060%, or 0.050%.

(Cu: 0% to 0.5%)

Cu has an effect of improving the strength of a weld metal by solid solution strengthening in a case where Cu is contained in the solid wire as a simple substance or an alloy as a plating on the surface of the solid wire. Similar effects are also obtained in a case where Cu is contained in the solid wire as a simple substance or an alloy. The lower limit of the Cu content of the solid wire is 0%, but the solid wire may contain Cu. For example, in order to obtain the effect of containing Cu, the lower limit of the Cu content of the solid wire may be 0.1%. In a case where the Cu content of the solid wire is greater than 0.5%, the toughness of the weld metal is reduced. Accordingly, the Cu content of the solid wire is 0.5% or less. In order to improve the toughness of the weld metal, the upper limit of the Cu content of the solid wire may be 0.3% or 0.2%.

(Cr: 0% to 0.5%)

Cr is an element effective in increasing the strength of a weld metal. The lower limit of the Cr content of the solid wire is 0%. However, the lower limit of the Cr content of the solid wire may be 0.01 % in order to obtain the effect of containing Cr. In a case where Cr is contained in the solid wire, the toughness of the weld metal is reduced in a case where the Cr content of the solid wire is greater than 0.5%. Accordingly, the Cr content of the solid wire is 0.5% or less. In order to further improve the toughness of the weld metal, the upper limit of the Cr content of the solid wire may be 0.3%, 0.2%, or 0.1%.

(Mo: 0% to 0.5%)

Mo is an element effective in increasing the strength of a weld metal by precipitation strengthening. The lower limit of the Mo content of the solid wire is 0%. However, the lower limit of the Mo content of the solid wire may be 0.01% in order to obtain the effect of containing Mo. In a case where Mo is contained in the solid wire, the toughness of the weld metal is reduced in a case where the Mo content of the solid wire is greater than 0.5%. Accordingly, the Mo content of the solid wire is 0.5% or less. In order to further improve the toughness of the weld metal, the upper limit of the Mo content of the solid wire may be 0.3%, 0.2%, or 0.1%.

(V: 0% to 0.20%)

V is an element effective in increasing the strength of a weld metal by precipitation strengthening. The lower limit of the V content of the solid wire is 0%. However, the lower limit of the V content of the solid wire may be 0.01% in order to obtain the effect of containing V. In a case where V is contained in the solid wire, the toughness of the weld metal is reduced in a case where the V content of the solid wire is greater than 0.20%. Accordingly, in a case where V is contained, the V content of the solid wire is 0.20% or less. In order to further improve the toughness of the weld metal, the upper limit of the V content of the solid wire may be 0.15%, 0.10%, or 0.05%.

(Ti: 0% to 0.10%)

Ti is effective in fixing solute N and relaxing an adverse effect on the toughness of a weld metal. Ti is also effective as a deoxidizing element, and has an effect of reducing the oxygen content in the weld metal. The lower limit of the Ti content of the solid wire is 0%. However, the lower limit of the Ti content of the solid wire may be 0.005% in order to obtain the effect of containing Ti. In a case where the solid wire contains Ti and has an excessive Ti content of greater than 0.10%, a carbide is formed, and the toughness of the weld metal is deteriorated. Accordingly, in a case where Ti is contained, the Ti content of the solid wire is 0.10% or less. In order to further improve the toughness of the weld metal, the upper limit of the Ti content of the solid wire may be 0.06%, 0.04%, or 0.02%.

(Nb: 0% to 0.10%)

Nb is effective in increasing the strength of a weld metal by precipitation strengthening. The lower limit of the Nb content of the solid wire is 0%. However, the lower limit of the Nb content may be 0.002% in order to obtain the effect of containing Nb. In a case where the solid wire contains Nb and has an excessive Nb content of greater than 0.10%, coarse precipitates are formed in the weld metal, and the toughness of the weld metal is deteriorated. In addition, in a case where the solid wire has an excessive Nb content of greater than 0.10%, there is a tendency that hot-cracking occurs. Accordingly, in a case where Nb is contained, the Nb content of the solid wire is 0.10% or less. In order to further improve the toughness of the weld metal, the upper limit of the Nb content of the solid wire may be 0.06%, 0.04%, or 0.02%.

(B: 0% to 0.010%)

B has an effect of forming BN in combination with solute N and reducing an adverse effect of the solute N on the toughness in a case where a weld metal contains an appropriate amount of B. The lower limit of the B content of the solid wire is 0%. However, the lower limit of the B content of the solid wire may be 0.0003% in order to obtain the effect of containing B. In a case where the solid wire contains B and the B content of the solid wire is greater than 0.010%, the B content in the weld metal is excessive, and coarse B compounds such as BN, $Fe_{23}(C,B)_6$, and the like are formed. Whereby, the toughness of the weld metal is deteriorated. In addition, in a case where the B content of the solid wire is greater than 0.010%, there is a tendency that hot-cracking occurs. Accordingly, in a case where B is contained, the B content of the solid wire is 0.010% or less. In order to further improve the toughness of the weld metal, the upper limit of the B content of the solid wire may be 0.006%, 0.004%, or 0.002%.

(Mg: 0% to 0.80%)

Mg is a deoxidizing element, reduces oxygen in a weld metal, and is effective in improving the toughness of the weld metal. The lower limit of the Mg content of the solid wire is 0%. However, in order to sufficiently obtain the effect of reducing the oxygen content in the weld metal, the lower limit of the Mg content of the solid wire may be 0.10%, 0.15%, 0.20%, 0.25%, or 0.30%. In a case where the Mg content of the solid wire is greater than 0.80%, spatters are increased, and welding workability is deteriorated. Accordingly, the upper limit of the Mg content of the solid wire is 0.80%. In order to further improve the welding workability, the upper limit of the Mg content of the solid wire may be 0.78%, 0.75%, 0.73%, 0.70%, 0.65%, or 0.60%.

(REM: 0% to 0.050%)

Since REM is not essential for solving the problems of the solid wire according to this embodiment, the lower limit of the REM content is 0%. However, since REM is an element which stabilizes the arc, it may be contained in the solid wire. In order to obtain the above effect, the lower limit of the REM content of the solid wire may be 0.001%, 0.010%, or 0.020%. In a case where REM is contained in the solid wire, the effective REM content for reducing the spatters and stabilizing the arc is 0.050% or less. In a case where the solid wire contains an excessive amount of REM, spatters are severely generated, and welding workability is deteriorated. Accordingly, in order to contribute to the reduction of spatters and the arc stabilization, the upper limit of the REM content of the solid wire may be 0.030%, 0.020%, 0.010%, 0.005%, or 0.001%. The term "REM" refers to a total of 17 elements consisting of Sc, Y, and lanthanoids, and the "REM content" means the total amount of the 17 elements. In a case where lanthanides are used as REM, REM is added in the form of misch metal industrially.

The chemical composition of the solid wire according to this embodiment contains the above-described elements, and a remainder thereof includes Fe and impurities. The impurities mean components which are mixed by raw materials such as ore or scrap, or by various factors in the manufacturing process in the industrial manufacturing of the solid wire, and are permitted within such a range that the characteristics of the solid wire according to this embodiment are not adversely affected.

($\alpha$: 1.36% to 5.50%)

The solid wire according to this embodiment contains the above-described elements. However, in order to secure the low temperature toughness of a weld metal at -196°C, the amount of the elements is controlled such that $\alpha$ represented by Formula a described below is 1.36% to 5.50%.

$$\alpha = 2 \times [Mn] + [Al] + 1.5 \times [Ti] + [Mg] + 10 \times [Ta] ... (Formula\ a)$$

Each element with [] indicates the amount (mass%) of the element.

The solid wire according to this embodiment is required to be applied to gas shielded arc welding (so-called MIG welding) using pure Ar or pure He as a shielding gas, and to enable stable welding even in a case where the solid wire is applied to gas shielded arc welding (so-called MAG welding) using, as a shielding gas, a mixed gas containing Ar and/or He as a main component and containing $O_2$ and/or $CO_2$ in a total amount of 20 vol% or less. In that case, in a case where the amount of Mn, Al, Ti, Mg, and Ta improving the cleanliness of a weld metal is not sufficient, it is thought that oxygen remains in the weld metal due to the oxygen contained in the solid wire and forms an oxide, and the oxide deteriorates the low temperature toughness of the weld metal. In order to suppress the deterioration in the low temperature toughness, the chemical composition of the solid wire is adjusted such that the value of a is 1.36% or greater. Accordingly, the lower limit of $\alpha$ of the solid wire is 1.36%. In a case where Mn, Al, Ti, Mg, and Ta are contained in the solid wire such that $\alpha$ is greater than 5.50%, these elements remain in an excessive amount in the weld metal and form a nitride or a carbide, and due to the nitride or the carbide, the strength of the weld metal is excessively increased, and the low temperature toughness of the weld metal deteriorates. In addition, in a case where these elements are contained in an excessive amount, these elements are not oxidized in the arc and metal vapors of Mn, Al, Ti, Mg, and Ta are generated in the arc, which make the arc unstable. Accordingly, in a case where $\alpha$ of the solid wire is greater than 5.50%, welding defects occur. Accordingly, the upper limit of $\alpha$ of the solid wire is 5.50%. In order to more reliably improve the low temperature toughness of the weld metal, the lower limit of $\alpha$ of the solid wire may be 1.40%, 1.45%, or 1.50%. The upper limit of $\alpha$ of the solid wire may be 5.40%, 5.30%, 5.20%, 5.10%, 5.00%, 4.90%, 4.80%, 4.70%, or 4.50%.

(Carbon Equivalent Ceq: 0.250% to 0.520%)

In the solid wire according to this embodiment, the amounts of C, Si, Mn, Ni, Cr, Mo, and V are further adjusted such that a carbon equivalent Ceq defined by the Japan Welding Engineering Society (WES), represented by Formula b described below, is 0.250% to 0.520%.

$$Ceq=[C]+[Si]/24+[Mn]/6+[Ni]/40+[Cr]/5+[Mo]/4+[V]/14...(Formula\ b)$$

Each element with [] indicates the amount of the element by mass%.

As the Ceq of the solid wire is increased, the tensile strength of a weld metal is improved, but the toughness of the weld metal is reduced, and weld cracking susceptibility is increased. Accordingly, in a case where the Ceq of the solid wire is high, a measure for suppressing cold-cracking is required. In a case where the value of Ceq of the solid wire is less than 0.250%, the desired strength (tensile strength) of 660 MPa or greater cannot be satisfied in the weld metal. In contrast, in a case where the value of Ceq of the solid wire is greater than 0.520%, the weld metal has an excessive tensile strength, and the toughness of the weld metal is reduced. Accordingly, the range of Ceq of the solid wire is 0.250% to 0.520%. In order to more stably secure the strength of the weld metal, the lower limit of Ceq of the solid wire may be 0.260%, 0.270%, 0.280%, 0.320%, or 0.360%. In order to further improve the toughness of the weld metal, the upper limit of Ceq of the solid wire may be 0.510%, 0.500%, or 0.490%.

In order to improve the feedability of the solid wire during welding, the solid wire may further have a lubricant on its surface. Various kinds of lubricants for a solid wire (for example, vegetable oil, mineral oil, and the like) can be used, and perfluoropolyether oil (PFPE oil) is preferably used to suppress cold-cracking of the weld metal. The components of the lubricant are not included in the chemical composition of the solid wire described above. This is because the chemical composition derived from the lubricant is very small with respect to the total mass of the solid wire. In the present disclosure, the chemical composition of the solid wire was measured after removal of the lubricant applied to the surface of the solid wire.

The diameter of the solid wire is not particularly limited. The diameter of the solid wire according to this embodiment may be 0.5 to 2.4 mm in consideration of solid wires and welding equipment distributed in the market. The diameter of the solid wire may be 0.8 mm or greater, or 1.0 mm or greater. The diameter of the solid wire may be 1.6 mm or less, or 1.4 mm or less.

The mechanical properties of the solid wire are also not particularly limited. From the viewpoint of improving the feedability of the solid wire during welding, the tensile strength of the solid wire is preferably low. For example, the tensile strength of the solid wire may be 950 MPa or less, 900 MPa or less, 850 MPa, 800 MPa, 750 MPa, or 700 MPa or less.

The tensile strength of the deposited metal obtained by gas shielded arc welding using the solid wire according to this embodiment is preferably 660 MPa to 900 MPa. The tensile strength of the deposited metal is measured based on "tensile and impact test method of deposited metal" in Japanese Industrial Standard JIS Z 3111: 2005. The tensile strength of the deposited metal is at the same level as a high-strength steel having a tensile strength of 660 MPa to 900 MPa. Optionally, the chemical composition of the solid wire may be controlled such that the lower limit of the tensile strength of the deposited metal obtained from the solid wire according to this embodiment can be limited to 685 MPa, and the upper limit thereof can be limited to 850 MPa. In JIS Z 3001: 2013, the "deposited metal" is defined as a "metal that has moved from the filler metal to the welded portion", and the "weld metal" (weld metal) is defined as a "metal that is a part of the welded portion, and melts and solidifies during welding".

The solid wire used in this embodiment can be manufactured by the same manufacturing process as a usual solid wire manufacturing method. That is, first, a steel having the above-described chemical composition is melted, and then optionally forged. After that, the steel is processed into a rod shape through rolling. A solid wire is obtained by drawing the rod-shaped steel. The solid wire may be appropriately heat-treated so as not to impair the feedability. Moreover, the solid wire may be plated. In this case, the average chemical composition of the whole solid wire including the plating component is required to be within the above-described range. A lubricant may be applied to a surface of the solid wire. As described above, since the chemical composition derived from the lubricant is very small with respect to the total mass of the solid wire, it is not necessary to consider the influence of the kind and amount of the lubricant applied on the chemical composition of the solid wire.

In a method of manufacturing a welded joint according to another aspect of the present invention, a steel material is welded using the solid wire according to this embodiment. The kind of the steel material is not particularly limited, but a steel material having a thickness of 6 mm to 100 mm, a Ni content of 5.5 mass% to 9.5 mass%, and a tensile strength of 660 MPa to 900 MPa (that is, a Ni alloy steel for low temperature service) is preferable. The welding is preferably gas shielded arc welding. For example, a steel material having a Ni content of 5.5 mass% to 9.5 mass%, a thickness of 6 mm to 100 mm, and a tensile strength of 660 MPa to 900 MPa is used for an LNG tank. The solid wire according to this embodiment can be used for welding of the above steel material. The shielding gas used during welding is not particularly limited, but for example, any one of a pure Ar gas, a pure He gas, a gas containing Ar and 20 vol% or less of one or both of $O_2$ and $CO_2$, and a gas containing He and 20 vol% or less of one or both of $O_2$ and $CO_2$ may be used. That is, in the method of manufacturing a welded joint according to this embodiment, a pure Ar gas or a pure He gas may be used as the shielding gas. Even in a case where a mixture of a pure Ar gas or a pure He gas with $O_2$ or $CO_2$ is used as the shielding gas, the effects of the solid wire and the method of manufacturing a welded joint according to this embodiment can be obtained in a case where the amount of $O_2$ or $CO_2$ is in a range of 20 vol% or less.

In the present disclosure, in a case where a pure Ar gas or a pure He gas is used as a shielding gas, this case corresponds to MIG welding. This form is preferable from the viewpoint of avoiding the mixing of oxygen into a weld metal.

In the present disclosure, in a case where a gas obtained by adding 20 vol% or less of one or both of $O_2$ and $CO_2$ to an Ar gas or a He gas is used as a shielding gas, this case corresponds to MAG welding. This form is preferable in a case where the arc stability during welding is emphasized.

In the present disclosure, a solid wire is employed as the form of a welding material, and a flux-cored wire is not employed. In the flux-cored wire, a metal powder or an oxide is added as a material of a weld metal in many cases. As a result, oxygen is likely to be mixed into the weld metal due to the oxide generated on the surface of the metal powder or the oxide that is an additive. In the present disclosure, particularly, a mixture of an Ar gas or a He gas with $O_2$ or $CO_2$ is assumed to be employed as a shielding gas, and a solid wire form is employed to reduce the mixing of oxygen into a weld metal.

[Examples]

Next, the feasibility and effects of the present invention will be described in more detail using examples.

Solid wires having various chemical compositions were manufactured. Annealing was added during drawing of the solid wire, and a final solid wire diameter was adjusted to φ1.2 mm. Regarding annealing conditions, the solid wire was held at 650°C for 4 hours. After experimental preparation, a lubricant was applied to a surface of the solid wire. All those not described as coated with PFPE oil in Tables 1-1 and 1-2 were coated with vegetable oil. Components of the solid wire were analyzed by chemical analysis, gas analysis, or the like. The analysis was performed in a state no lubricant was on the surface of the solid wire.

Tables 1-1 and 1-2 show the chemical compositions of the solid wires prepared experimentally, the presence or absence of coating with PFPE oil, and the tensile strengths ("wire strengths") of the solid wires. The chemical compositions of the solid wires shown in Tables 1-1 and 1-2 are results of the analysis by the above analysis method. Values outside the scope of the present invention were underlined. In addition, the amounts of elements below the detection limit were not listed, and were represented by blanks. The unit of the tensile strength of the solid wire is MPa.

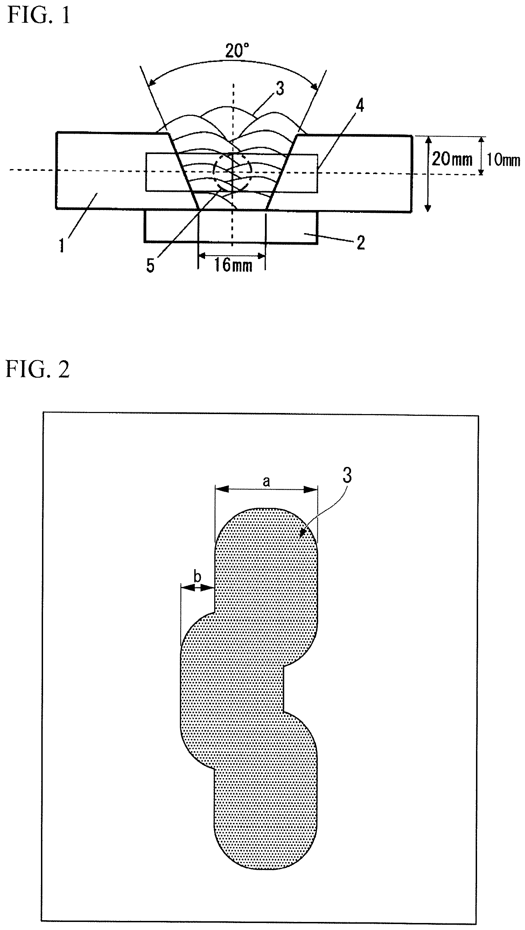

Using the solid wires shown in Tables 1-1 and 1-2, the mechanical characteristics of deposited metals were evaluated according to JIS Z 3111: 2005. That is, a method shown in FIG. 1 was used. A steel sheet 1 having a thickness of 20 mm was butted at a groove angle of 20° with a root gap of 16 mm with the use of a backing metal 2. SM490A was used as the steel sheet 1 and the backing metal 2, and buttering of two or more layers and of 3 mm or more was performed on a groove surface of the steel sheet 1 and a surface of the backing metal 2 using the solid wire to be subjected to a test. After that, the welding was performed with one or two passes at first and second layers and with two or three passes from a third layer to a final layer to prepare a test piece. Welding conditions are shown in Tables 2 and 4 (the composition of the shielding gas is expressed in vol%). Table 2 shows the welding conditions for MAG welding, and Table 4 shows the welding conditions for MIG welding. As seen from Table 2, the welding was performed under the conditions of a current value of 280 A, a voltage value of 24 to 28 V, a welding rate of 30 cm/min, an interpass temperature of 150°C or lower, and a gas flow rate of 25 l/min using a mixed gas of Ar with 15 vol% of $CO_2$ as a shielding gas. As seen from Table 4, the welding was performed under the conditions of a current value of 260 A, a voltage value of 22 to 26 V, a welding rate of 30 cm/min, an interpass temperature of 150°C or lower, and a gas flow rate of 25 l/min using an Ar gas as a shielding gas.

As shown in FIG. 1, an A0-tensile test piece (round bar) 5 (diameter=10 mm) according to JIS Z3111: 2005 and a Charpy impact test piece (2 mm V-notch) 4 were collected from the prepared test piece, and respective mechanical characteristic tests were performed to measure the tensile strength and the Charpy absorbed energy of the deposited metal. In a case where it was not possible to perform the mechanical characteristic test due to severe welding defects, the fact that no evaluation could be performed was recorded. Regarding the measurement results and the evaluation results of the mechanical characteristics of the deposited metals obtained using the respective solid wires by the above-described method, the results of MAG welding of Table 2 are shown in Tables 3-1 and 3-2, and the results of MIG welding of Table 4 are shown in Tables 5-1 and 5-2. In these tables, values not reaching the acceptance criteria were underlined. A solid wire which passed both the test under the conditions of Table 2 (MAG welding) and the test under the conditions of Table 4 (MIG welding) was judged as a solid wire having excellent welding workability and making it possible to obtain a weld metal having an excellent tensile strength and excellent low temperature toughness at -196°C. The evaluation method and the criteria for judging acceptance were the same in both the test under the conditions of Table 2 (MAG welding) and the test under the conditions of Table 4 (MIG welding).

In the evaluation of the mechanical characteristics, those having a tensile strength of 660 to 900 MPa with absorbed energy of 50 J or greater in a Charpy impact test at -196°C were judged to be acceptable.

A test piece was collected from the obtained deposited metal, and the oxygen content in the deposited metal was measured. The oxygen content in the deposited metal was measured by an impulse heating furnace-inert gas melting infrared absorption method. The oxygen content measured in each of the deposited metals is shown in Tables 3-1 and 3-2.

In the solid wire according to the present invention, the toughness is improved by reducing the oxygen content in the deposited metal. As seen from invention examples and comparative examples, it was confirmed that the Charpy absorbed energy at -196°C cannot be secured unless the oxygen content is 160 ppm or less.

Next, the welding defect resistance of each solid wire was evaluated. Regarding this, a steel for low temperature service having a thickness of 25 mm shown in Table 6 was subjected to the evaluation of an incidence of pore defects (ratio of welding defect length to welding length) or weld bead consistency when a weld bead of one downward pass was prepared under the welding conditions of Table 2. In the welding defect evaluation, a sample having a welding defect length of 5% or less and having neither bead shape defect nor hot-cracking caused due to excessive spatters was judged to be acceptable, and "None" was recorded in the table. In the evaluation of the weld bead consistency, a part where the largest meandering had occurred in the bead formed by the welding was visually specified, and those in which a distance (length b) between a toe portion of a weld bead in a case where the weld bead meandered as shown in FIG. 2 and a toe portion of a normal weld bead was 25% or less of the bead width (length a) was judged to be acceptable. The value obtained by b/a×100 is called a weld bead consistency ratio. Regarding the arc stability, a case where the total arc extinguishing time is 10% or less of the total arc generation time (that is, the "arc duration time" in Tables 3-1 and 3-2 is greater than 90%) is judged to be acceptable.

As shown in the test results of Tables 3-1 and 5-1, solid wire Nos. A1 to A23 as invention examples were excellent in tensile strength, toughness, welding defect resistance, arc stability, and weld bead consistency, and were judged to be acceptable.

In contrast, as shown in the test results of Tables 3-2 and 5-2, since solid wire Nos. B1 to B22 as comparative examples did not satisfy the requirements specified in the present invention, it was not possible to obtain a satisfactory result in one or more of tensile strength, toughness, welding defect resistance, arc stability, and weld bead consistency, and the solid wires were judged to be unacceptable in a comprehensive manner.

[Table 1-1]

Chemical composition of solid wire [mass%, remainder: Fe and impurities]

| Example | C | Si | Mn | Al | Ni | Ta | Mg | P | S | Cu | Cr | Mo | V | Ti | Nb | B | REM | O | Ceq | σ | PFPE | strength of wire |
|---|---|---|---|---|---|---|---|---|---|---|---|---|---|---|---|---|---|---|---|---|---|---|
| A1 | 0.022 | 0.05 | 0.65 | 0.055 | 11.0 | | | 0.0070 | 0.0010 | | | | | 0.01 | | | | 0.001 | 0.407 | 1.37 | | 792 |
| A2 | 0.008 | 0.03 | 0.80 | 0.150 | 12.0 | | | 0.0100 | 0.0020 | 0.25 | | | | | | | 0.005 | 0.003 | 0.443 | 1.75 | PFPE | 822 |
| A3 | 0.030 | 0.005 | 0.62 | 0.080 | 14.0 | | | 0.0100 | 0.0020 | | 0.1 | | | 0.03 | 0.01 | | | 0.002 | 0.504 | 1.37 | PFPE | 835 |
| A4 | 0.015 | 0.08 | 0.65 | 0.075 | 14.0 | | | 0.0050 | 0.0010 | 0.06 | | 0.1 | | 0.03 | | | | 0.002 | 0.502 | 1.42 | | 826 |
| A5 | 0.012 | 0.08 | 0.12 | 0.450 | 13.0 | | 0.41 | 0.0100 | 0.0050 | 0.20 | | | | 0.08 | 0.02 | | 0.001 | 0.003 | 0.360 | 2.02 | | 784 |
| A6 | 0.032 | 0.21 | 0.68 | 0.075 | 9.0 | 0.0800 | | 0.0150 | 0.0030 | | 0.3 | | | | | | | 0.020 | 0.439 | 1.44 | | 798 |
| A7 | 0.011 | 0.08 | 0.80 | 0.100 | 12.0 | 0.0100 | | 0.0030 | 0.0040 | 0.10 | | | | | | 0.001 | | 0.001 | 0.448 | 1.80 | PFPE | 840 |
| A8 | 0.013 | 0.18 | 0.85 | 0.085 | 14.0 | 0.0095 | | 0.0110 | 0.0090 | | | | | 0.03 | | | | 0.002 | 0.512 | 1.93 | | 862 |
| A9 | 0.028 | 0.26 | 0.65 | 0.065 | 11.0 | | 0.56 | 0.0080 | 0.0030 | | | 0.3 | | | | 0.007 | | 0.003 | 0.497 | 1.93 | | 866 |
| A10 | 0.075 | 0.10 | 0.85 | 0.150 | 11.9 | | | 0.0060 | 0.0020 | | | | | | | | 0.002 | 0.005 | 0.518 | 1.85 | PFPE | 861 |
| A11 | 0.009 | 0.48 | 0.65 | 0.073 | 15.2 | | | 0.0100 | 0.0030 | | | | | 0.05 | | | | 0.004 | 0.517 | 1.45 | | 868 |
| A12 | 0.008 | 0.01 | 1.68 | 0.350 | 9.2 | 0.0500 | 0.40 | 0.0080 | 0.0010 | | | | 0.01 | | 0.01 | | | 0.005 | 0.519 | 4.61 | | 866 |
| A13 | 0.025 | 0.06 | 0.80 | 0.480 | 13.0 | | | 0.0090 | 0.0030 | | | | | | 0.05 | | | 0.003 | 0.486 | 2.08 | PFPE | 840 |
| A14 | 0.029 | 0.11 | 0.80 | 0.150 | 12.0 | 0.0850 | 0.26 | 0.0100 | 0.0050 | | | | | | | | | 0.006 | 0.467 | 2.86 | | 855 |
| A15 | 0.025 | 0.08 | 0.68 | 0.090 | 12.8 | 0.0110 | 0.58 | 0.0040 | 0.0030 | 0.30 | | | | 0.08 | | | 0.040 | 0.002 | 0.462 | 2.26 | | 846 |
| A16 | 0.024 | 0.22 | 0.57 | 0.058 | 11.0 | | 0.75 | 0.0070 | 0.0030 | | | | | | | | | 0.003 | 0.403 | 1.95 | | 736 |
| A17 | 0.010 | 0.08 | 1.20 | 0.450 | 11.2 | 0.0750 | | 0.0070 | 0.0030 | | | | | 0.09 | | | | 0.003 | 0.493 | 3.74 | PFPE | 845 |
| A18 | 0.010 | 0.12 | 1.10 | 0.410 | 12.5 | 0.0500 | | 0.0050 | 0.0010 | 0.15 | | | | 0.05 | | | | 0.003 | 0.511 | 3.19 | | 862 |
| A19 | 0.010 | 0.05 | 1.10 | 0.350 | 12.5 | | 0.35 | 0.0050 | 0.0020 | | | | | 0.06 | | | | 0.003 | 0.508 | 2.99 | PFPE | 773 |
| A20 | 0.020 | 0.08 | 0.65 | 0.055 | 13.1 | | | 0.0050 | 0.0010 | 0.25 | | | | 0.01 | | | | 0.003 | 0.459 | 1.37 | | 864 |
| A21 | 0.020 | 0.08 | 0.64 | 0.045 | 12.8 | | | 0.0050 | 0.0010 | 0.25 | | | | 0.05 | | | | 0.003 | 0.450 | 1.40 | PFPE | 862 |
| A22 | 0.025 | 0.15 | 0.67 | 0.038 | 14.2 | | | 0.0050 | 0.0010 | 0.25 | | | | | | | | 0.003 | 0.498 | 1.38 | | 849 |
| A23 | 0.013 | 0.08 | 0.86 | 0.065 | 13.8 | | | 0.0080 | 0.0010 | | | | | | | | | 0.002 | 0.505 | 1.79 | | 786 |

[Table 1-2]

|  |  | Chemical composition of solid wire [mass%、remainder: Fe and impurities] | | | | | | | | | | | | | | | | | | | PFPE | strength of wire |
|---|---|---|---|---|---|---|---|---|---|---|---|---|---|---|---|---|---|---|---|---|---|---|---|
|  |  | C | Si | Mn | Al | Ni | Ta | Mg | P | S | Cu | Cr | Mo | V | Ti | Nb | B | REM | O | Ceq | α | | |
| comparative example | B1 | 0.001 | 0.08 | 0.40 | 0.050 | 12.0 | 0.0300 | 0.20 | 0.0100 | 0.0020 | | | | | | | | | 0.002 | 0.371 | 1.35 | | 745 |
| | B2 | 0.100 | 0.01 | 0.65 | 0.050 | 11.5 | | | 0.0100 | 0.0050 | | | | | 0.01 | | | | 0.002 | 0.496 | 1.37 | | 843 |
| | B3 | 0.025 | 0.0002 | 0.57 | 0.060 | 10.0 | 0.0100 | 0.10 | 0.0150 | 0.0060 | | 0.1 | | | | | | | 0.003 | 0.390 | 1.40 | PFPE | 830 |
| | B4 | 0.020 | 0.700 | 0.55 | 0.060 | 10.0 | 0.0100 | | 0.0100 | 0.0010 | | | | | 0.08 | 0.04 | | 0.005 | 0.001 | 0.391 | 1.38 | | 753 |
| | B5 | 0.032 | 0.12 | 0.030 | 0.500 | 10.0 | 0.0900 | | 0.0080 | 0.0040 | 0.10 | | | | 0.10 | | | | 0.004 | 0.292 | 1.61 | | 780 |
| | B6 | 0.005 | 0.01 | 1.85 | 0.054 | 8.2 | | | 0.0100 | 0.0080 | | | | | 0.005 | | | 0.005 | 0.003 | 0.519 | 3.76 | PFPE | 884 |
| | B7 | 0.040 | 0.14 | 0.75 | 0.021 | 11.0 | 0.0120 | 0.41 | 0.0060 | 0.0050 | | | | | | | | | 0.003 | 0.446 | 2.05 | PFPE | 810 |
| | B8 | 0.030 | 0.22 | 0.60 | 0.750 | 14.0 | 0.0030 | | 0.0100 | 0.0010 | | | 0.1 | | | | | | 0.002 | 0.514 | 1.98 | | 871 |
| | B9 | 0.030 | 0.26 | 0.65 | 0.100 | 7.0 | | | 0.0040 | 0.0030 | | | | | | | | | 0.001 | 0.324 | 1.40 | | 738 |
| | B10 | 0.036 | 0.28 | 0.75 | 0.060 | 10.0 | 0.1100 | | 0.0140 | 0.0050 | | | | | | | | | 0.005 | 0.423 | 2.66 | | 785 |
| | B11 | 0.008 | 0.01 | 0.15 | 0.100 | 8.3 | 0.0550 | 0.34 | 0.0080 | 0.0030 | | | | | 0.08 | 0.001 | | | 0.003 | 0.241 | 1.41 | PFPE | 725 |
| | B12 | 0.050 | 0.33 | 0.85 | 0.110 | 12.0 | 0.0100 | | 0.0040 | 0.0020 | | 0.1 | 0.2 | | | | | | 0.002 | 0.575 | 1.91 | | 930 |
| | B13 | 0.020 | 0.10 | 0.51 | 0.050 | 11.0 | | | 0.0080 | 0.0030 | 0.10 | | | 0.1 | 0.05 | 0.003 | 0.005 | | 0.004 | 0.391 | 1.15 | PFPE | 763 |
| | B14 | 0.008 | 0.01 | 1.79 | 0.490 | 8.5 | 0.0850 | 0.75 | 0.0070 | 0.0020 | | | | | 0.10 | 0.05 | | | 0.003 | 0.519 | 5.81 | PFPE | 887 |
| | B15 | 0.010 | 0.05 | 0.75 | 0.060 | 9.0 | 0.0070 | 0.85 | 0.0060 | 0.0010 | | | 0.6 | | | | | | 0.012 | 0.512 | 2.48 | | 845 |
| | B16 | 0.035 | 0.09 | 0.65 | 0.080 | 10.0 | 0.0060 | | 0.0250 | 0.0040 | | | | | 0.20 | | | | 0.004 | 0.397 | 1.74 | | 754 |
| | B17 | 0.028 | 0.13 | 0.80 | 0.130 | 11.0 | | | 0.0080 | 0.0150 | | | | | | | | 0.07 | 0.008 | 0.442 | 1.73 | | 798 |
| | B18 | 0.019 | 0.31 | 0.70 | 0.140 | 9.0 | | 0.30 | 0.0090 | 0.0030 | 0.60 | | | | | 0.20 | | | 0.002 | 0.374 | 1.84 | | 766 |
| | B19 | 0.008 | 0.07 | 0.55 | 0.090 | 11.8 | 0.0080 | | 0.0100 | 0.0040 | | 0.6 | | | 0.06 | | 0.020 | | 0.003 | 0.518 | 1.36 | PFPE | 872 |
| | B20 | 0.037 | 0.05 | 0.65 | 0.090 | 14.0 | 0.0200 | | 0.0060 | 0.0030 | | | | 0.3 | | | | | 0.06 | 0.519 | 1.59 | | 858 |
| | B21 | 0.015 | 0.08 | 0.45 | 0.045 | 12.0 | | | 0.0080 | 0.0030 | | 0.1 | | | 0.06 | | | | 0.003 | 0.418 | 1.04 | PFPE | 784 |
| | B22 | 0.030 | 0.15 | 0.42 | 0.040 | 12.8 | | | 0.0080 | 0.0030 | 0.20 | | | | 0.03 | | | | 0.002 | 0.426 | 0.93 | PFPE | 783 |

[Table 2]

| Welding currrent [A] | Welding voltage [V] | Welding rate [cm/min] | Interpass temparature [°C] | Shielding gas | Gas flow rate [l/min] |
|---|---|---|---|---|---|
| 280 | 24 to 28 | 30 | 150°C or lower | Ar-15%$CO_2$ | 25 |

[Table 3-1]

| No. | Evaluation | | | | | | | |
|---|---|---|---|---|---|---|---|---|
| | Welding defects | Arc stability | Arc duration time rate[%] | Weld bead consistency [%] | Tensile strength [MPa] | $vE_{-196}$ [J] | O [ppm] | Acceptance |
| A1 | None | Stable | 100 | 3 | 698 | 65 | 150 | Acceptable |
| A2 | None | Stable | 100 | 2 | 795 | 80 | 120 | Acceptable |
| A3 | None | Stable | 100 | 4 | 768 | 73 | 145 | Acceptable |
| A4 | None | Stable | 100 | 3 | 807 | 72 | 138 | Acceptable |
| A5 | None | Stable | 100 | 3 | 745 | 87 | 105 | Acceptable |
| A6 | None | Stable | 100 | 5 | 755 | 63 | 140 | Acceptable |
| A7 | None | Stable | 100 | 2 | 805 | 72 | 120 | Acceptable |
| A8 | None | Stable | 100 | 3 | 784 | 70 | 135 | Acceptable |
| A9 | None | Stable | 100 | 4 | 795 | 68 | 130 | Acceptable |
| A10 | None | Stable | 100 | 3 | 774 | 63 | 130 | Acceptable |
| A11 | None | Stable | 100 | 2 | 800 | 83 | 120 | Acceptable |
| A12 | None | Stable | 100 | 1 | 805 | 78 | 80 | Acceptable |
| A13 | None | Stable | 95 | 5 | 770 | 83 | 105 | Acceptable |

(continued)

| No. | Evaluation | | | | | | | |
|---|---|---|---|---|---|---|---|---|
| | Welding defects | Arc stability | Arc duration time rate[%] | Weld bead consistency [%] | Tensile strength [MPa] | $vE_{-196}$ [J] | O [ppm] | Acceptance |
| A14 | None | Stable | 100 | 2 | 768 | 77 | 130 | Acceptable |
| A15 | None | Stable | 100 | 2 | 789 | 83 | 125 | Acceptable |
| A16 | None | Stable | 95 | 6 | 738 | 73 | 135 | Acceptable |
| A17 | None | Stable | 100 | 5 | 785 | 74 | 110 | Acceptable |
| A18 | None | Stable | 100 | 5 | 832 | 84 | 105 | Acceptable |
| A19 | None | Stable | 100 | 5 | 754 | 93 | 98 | Acceptable |
| A20 | None | Stable | 100 | 4 | 811 | 68 | 136 | Acceptable |
| A21 | None | Stable | 100 | 2 | 794 | 72 | 130 | Acceptable |
| A22 | None | Stable | 100 | 5 | 830 | 81 | 118 | Acceptable |
| A23 | None | Stable | 100 | 5 | 778 | 78 | 124 | Acceptable |

[Table 3-2]

| No. | Evaluation | | | | | | | |
|---|---|---|---|---|---|---|---|---|
| | Welding defects | Arc stability | Arc duration time rate[%] | Weld bead consistency [%] | Tensile strength [MPa] | $vE_{-196}$ [J] | O [ppm] | Acceptance |
| B1 | None | Stable | 100 | 3.0 | 640 | 55 | 135 | Not Acceptable |
| B2 | None | Stable | 100 | 4.0 | 920 | 25 | 120 | Not Acceptable |
| B3 | Pore defects | Unstable arc | 80 | 27.0 | 788 | 33 | 195 | Not Acceptable |
| B4 | None | Stable | 100 | 3.0 | 744 | 27 | 120 | Not Acceptable |
| B5 | None | Stable | 95 | 5.0 | 698 | 22 | 187 | Not Acceptable |
| B6 | None | Stable | 95 | 7.0 | 806 | 24 | 105 | Not Acceptable |
| B7 | Pore defects | Unstable arc | 70 | 35.0 | Not evaluated | | | Not Acceptable |
| B8 | None | Stable | 100 | 2.0 | 820 | 26 | 105 | Not Acceptable |
| B9 | None | Stable | 95 | 7.0 | 725 | 24 | 140 | Not Acceptable |
| B10 | None | Stable | 100 | 3.0 | 793 | 43 | 105 | Not Acceptable |
| B11 | None | Stable | 100 | 4.0 | 650 | 60 | 145 | Not Acceptable |

(continued)

| No. | Evaluation | | | | | | | |
|---|---|---|---|---|---|---|---|---|
| | Welding defects | Arc stability | Arc duration time rate[%] | Weld bead consistency [%] | Tensile strength [MPa] | vE$_{-196}$ [J] | O [ppm] | Acceptance |
| B12 | None | Stable | 95 | 7.0 | <u>910</u> | <u>20</u> | 140 | Not Acceptable |
| B13 | None | Stable | 95 | 6.0 | 735 | 23 | <u>210</u> | Not Acceptable |
| B14 | <u>Excessive spatters</u> | <u>Unstable arc</u> | <u>75</u> | <u>31.0</u> | Not evaluated | | | Not Acceptable |
| B15 | <u>Pore defects</u> | <u>Unstable arc</u> | <u>75</u> | <u>32.0</u> | Not evaluated | | | Not Acceptable |
| B16 | <u>Hot-cracking</u> | Stable | 100 | 3.0 | Not evaluated | | | Not Acceptable |
| B17 | <u>Hot-cracking</u> | <u>Unstable arc</u> | <u>75</u> | <u>36.0</u> | Not evaluated | | | Not Acceptable |
| B18 | <u>Hot-cracking</u> | Stable | 100 | 4.0 | Not evaluated | | | Not Acceptable |
| B19 | <u>Hot-cracking</u> | Stable | 100 | 5.0 | Not evaluated | | | Not Acceptable |
| B20 | None | Stable | 95 | 6.0 | 777 | <u>26</u> | <u>550</u> | Not Acceptable |
| B21 | None | Stable | 100 | 4.0 | 758 | <u>28</u> | <u>240</u> | Not Acceptable |
| B22 | None | Stable | 95 | 7.0 | 728 | <u>18</u> | <u>280</u> | Not Acceptable |

[Table 4]

| Welding current [A] | Welding voltage [V] | Welding rate [cm/min] | Interpass temparature [°C] | Shielding gas | Gas flow rate [l/min] |
|---|---|---|---|---|---|
| 260 | 22 to 26 | 30 | 150°C or lower | Ar | 25 |

[Table 5-1]

| No. | Evaluation | | | | | | | |
|---|---|---|---|---|---|---|---|---|
| | Welding defects | Arc stability | Arc duration time rate[%] | Weld bead consistency [%] | Tensile strength [MPa] | vE$_{-196}$ [J] | O [ppm] | Acceptance |
| A1 | None | Stable | 100 | 3 | 710 | 75 | 72 | Acceptable |
| A2 | None | Stable | 100 | 2 | 802 | 120 | 65 | Acceptable |
| A3 | None | Stable | 100 | 4 | 780 | 128 | 72 | Acceptable |
| A4 | None | Stable | 100 | 3 | 835 | 139 | 68 | Acceptable |
| A5 | None | Stable | 100 | 3 | 739 | 135 | 58 | Acceptable |
| A6 | None | Stable | 100 | 5 | 748 | 110 | 59 | Acceptable |

(continued)

| No. | Evaluation | | | | | | | |
| --- | --- | --- | --- | --- | --- | --- | --- | --- |
| | Welding defects | Arc stability | Arc duration time rate[%] | Weld bead consistency [%] | Tensile strength [MPa] | $vE_{-196}$ [J] | O [ppm] | Acceptance |
| A7 | None | Stable | 100 | 2 | 818 | 108 | 60 | Acceptable |
| A8 | None | Stable | 100 | 3 | 782 | 130 | 48 | Acceptable |
| A9 | None | Stable | 100 | 4 | 784 | 118 | 52 | Acceptable |
| A10 | None | Stable | 100 | 3 | 778 | 110 | 66 | Acceptable |
| A11 | None | Stable | 100 | 2 | 810 | 144 | 62 | Acceptable |
| A12 | None | Stable | 100 | 1 | 799 | 122 | 39 | Acceptable |
| A13 | None | Stable | 95 | 7 | 769 | 132 | 57 | Acceptable |
| A14 | None | Stable | 100 | 2 | 781 | 124 | 57 | Acceptable |
| A15 | None | Stable | 95 | 6 | 815 | 136 | 52 | Acceptable |
| A16 | None | Stable | 95 | 6 | 741 | 114 | 69 | Acceptable |
| A17 | None | Stable | 100 | 5 | 803 | 162 | 39 | Acceptable |
| A18 | None | Stable | 100 | 5 | 841 | 130 | 48 | Acceptable |
| A19 | None | Stable | 95 | 7 | 753 | 126 | 53 | Acceptable |
| A20 | None | Stable | 100 | 4 | 785 | 119 | 72 | Acceptable |
| A21 | None | Stable | 100 | 2 | 783 | 103 | 85 | Acceptable |
| A22 | None | Stable | 100 | 6 | 811 | 117 | 73 | Acceptable |
| A23 | None | Stable | 95 | 5 | 801 | 95 | 78 | Acceptable |

[Table 5-2]

| No. | Evaluation | | | | | | | |
| --- | --- | --- | --- | --- | --- | --- | --- | --- |
| | Welding defects | Arc stability | Arc duration time rate[%] | Weld bead consistency [%] | Tensile strength [MPa] | $VE_{-196}$ [J] | O [ppm] | Acceptance |
| B1 | None | Stable | 100 | 5.0 | 648 | 82 | 85 | Not Acceptable |
| B2 | None | Stable | 95 | 7.0 | 920 | 32 | 82 | Not Acceptable |
| B3 | Pore defects | Unstable arc | 70 | 35.0 | Not evaluated | | | Not Acceptable |
| B4 | None | Stable | 100 | 4.0 | 744 | 27 | 86 | Not Acceptable |
| B5 | Hot cracking | Stable | 95 | 6.0 | 580 | 22 | 76 | Not Acceptable |
| B6 | None | Stable | 95 | 8.0 | 875 | 56 | 60 | Acceptable |
| B7 | Pore defects | Unstable arc | 70 | 37.0 | Not evaluated | | | Not Acceptable |
| B8 | Pore defects | Unstable arc | 80 | 31.0 | Not evaluated | | | Not Acceptable |

(continued)

| No. | Evaluation | | | | | | | |
|---|---|---|---|---|---|---|---|---|
| | Welding defects | Arc stability | Arc duration time rate[%] | Weld bead consistency [%] | Tensile strength [MPa] | VE$_{-196}$ [J] | O [ppm] | Acceptance |
| B9 | None | Stable | 95 | 7.0 | 710 | 24 | 83 | Not Acceptable |
| B10 | None | Stable | 95 | 7.0 | 820 | 42 | 68 | Not Acceptable |
| B11 | None | Stable | 95 | 6.0 | 652 | 60 | 83 | Not Acceptable |
| B12 | None | Stable | 90 | 10.0 | 930 | 20 | 72 | Not Acceptable |
| B13 | None | Stable | 90 | 10.0 | 745 | 68 | 110 | Acceptable |
| B14 | Excessive spatters | Unstable arc | 75 | 28.0 | Not evaluated | | | Not Acceptable |
| B15 | Pore defects | Unstable arc | 75 | 32.0 | Not evaluated | | | Not Acceptable |
| B16 | Hot cracking | Stable | 95 | 3.0 | Not evaluated | | | Not Acceptable |
| B17 | Hot cracking | Unstable arc | 75 | 36.0 | Not evaluated | | | Not Acceptable |
| B18 | Hot cracking | Stable | 100 | 4.0 | Not evaluated | | | Not Acceptable |
| B19 | Hot cracking | Stable | 95 | 5.0 | Not evaluated | | | Not Acceptable |
| | None | Stable | 95 | 7.0 | 786 | 24 | 550 | Not Acceptable |
| B21 | None | Stable | 100 | 5.0 | 766 | 57 | 135 | Acceptable |
| B22 | None | Stable | 95 | 8.0 | 758 | 52 | 146 | Acceptable |

[Table 6]

| No. | thickness [mm] | Chemical composition of steel material[mass%] | | | | | | | | | | | Mechanical characteristics of steel material | | |
|---|---|---|---|---|---|---|---|---|---|---|---|---|---|---|---|
| | | C | Si | Mn | P | S | Ni | Mo | Al | N | O | Ceq | Yield strength [MPa] | Tensile strength [MPa] | Charpy absorbed energy at -196°C [J] |
| P1 | 25 | 0.06 | 0.2 | 0.6 | 0.002 | 0.001 | 9.12 | 0.01 | 0.04 | 0.004 | 0.001 | 0.4 | 675 | 725 | 178 |

[Industrial Applicability]

A solid wire according to this embodiment can significantly reduce the welding material cost by reducing the Ni content. In addition, the solid wire according to this embodiment can be applied to gas shielded arc welding (for example, MIG welding and MAG welding) having excellent welding efficiency. Furthermore, the solid wire according to this embodiment makes it possible to obtain a weld metal having excellent low temperature toughness at -196°C by reducing the oxygen content in the weld metal by deoxidizing elements and a minute amount of elements contained therein. For example, in a case where the solid wire according to this embodiment is used for welding of a Ni-based steel for low temperature service containing about 5.5% to 9.5% of Ni, it can exhibit remarkable effects on the related art. Accordingly, the solid wire according to this embodiment is valuable in industry.

[Brief Description of the Reference Symbols]

1    steel sheet
2    backing metal
3    weld bead
4    Charpy impact test piece (2 mm V-notch)
5    A0-tensile test piece (round bar)

**Claims**

1. A solid wire comprising, as a chemical composition, by mass% with respect to a total mass of the solid wire:

   C: 0.003% to 0.080%;
   Si: 0.0010% to 0.50%;
   Mn: 0.050% to 1.80%;
   Al: 0.030% to 0.500%;
   Ni: 8.0% to 16.0%;
   P: 0.0200% or less;
   S: 0.0100% or less;
   O: 0.050% or less;
   Ta: 0% to 0.1000%;
   Cu: 0% to 0.5%;
   Cr: 0% to 0.5%;
   Mo: 0% to 0.5%;
   V: 0% to 0.20%;
   Ti: 0% to 0.10%;
   Nb: 0% to 0.10%;
   B: 0% to 0.010%;
   Mg: 0% to 0.80%;
   REM: 0% to 0.050%; and
   a remainder: Fe and impurities,
   wherein $\alpha$ defined by Formula a described below is 1.36% to 5.50%, and
   Ceq defined by Formula b described below is 0.250% to 0.520%,

$$\alpha = 2 \times [Mn] + [Al] + 1.5 \times [Ti] + [Mg] + 10 \times [Ta] ...(Formula\ a)$$

$$Ceq = [C] + [Si]/24 + [Mn]/6 + [Ni]/40 + [Cr]/5 + [Mo]/4 + [V]/14 ...(Formula\ b)$$

   in Formulae a and b, each element with [] indicates an amount of the element by mass% with respect to the total mass of the solid wire.

2. The solid wire according to claim 1,

wherein the chemical composition contains, by mass% with respect to the total mass of the solid wire, one or more selected from the group consisting of:

Ta: 0.0005% to 0.1000%;
Cu: 0.1% to 0.5%;
Cr: 0.01% to 0.5%;
Mo: 0.01% to 0.5%;
V: 0.01% to 0.20%;
Ti: 0.005% to 0.10%;
Nb: 0.002% to 0.10%;
B: 0.0003% to 0.010%;
Mg: 0.10% to 0.80%; and
REM: 0.001% to 0.050%.

3. The solid wire according to claim 1 or 2,
wherein an amount of the REM in the solid wire is 0.010% or less by mass% with respect to the total mass of the solid wire.

4. The solid wire according to any one of claims 1 to 3,
wherein a surface has perfluoropolyether oil thereon.

5. The solid wire according to any one of claims 1 to 4,
wherein a tensile strength is 500 MPa to 1,000 MPa which is determined in accordance with the description.

6. The solid wire according to any one of claims 1 to 5, wherein the upper limit of the REM content of the solid wire is 0.001 %.

7. A method of manufacturing a welded joint, comprising:
welding a steel material using the solid wire according to any one of claims 1 to 6.

8. The method of manufacturing a welded joint according to claim 7,

wherein the steel material has
a thickness of 6 mm to 100 mm,
a Ni content of 5.5 mass% to 9.5 mass%, and
a tensile strength of 660 MPa to 900 MPa, determined in accordance with the description.

9. The method of manufacturing a welded joint according to claim 7 or 8,
wherein the welding is gas shielded arc welding.

10. The method of manufacturing a welded joint according to claim 9,
wherein a shielding gas is any one of a pure Ar gas, a pure He gas, a gas containing Ar and 20 vol% or less of one or both of $O_2$ and $CO_2$, and a gas containing He and 20 vol% or less of one or both of $O_2$ and $CO_2$.

**Patentansprüche**

1. Ein Massivdraht, umfassend, als chemische Zusammensetzung, in Massen-%, bezogen auf eine Gesamtmasse des Massivdrahts:

C: 0,003% bis 0,080%;
Si: 0,0010% bis 0,50%;
Mn: 0,050% bis 1,80%;
Al: 0,030% bis 0,500%;
Ni: 8,0% bis 16,0%;
P: 0,0200% oder weniger;
S: 0,0100% oder weniger;
O: 0,050% oder weniger;

Ta: 0% bis 0,1000%;
Cu: 0% bis 0,5%;
Cr: 0% bis 0,5%;
Mo: 0% bis 0,5%;
V: 0% bis 0,20%;
Ti: 0% bis 0,10%;
Nb: 0% bis 0,10%;
B: 0% bis 0,010%;
Mg: 0% bis 0,80%;
Seltenerdmetalle: 0% bis 0,050%; und
einen Rest: Fe und Verunreinigungen,
wobei α, definiert durch nachstehend beschriebene Formel a, 1,36% bis 5,50% beträgt und
CÄq, definiert durch nachstehend beschriebene Formel b, 0,250% bis 0,520% beträgt,

$$\alpha = 2 \times [Mn] + [Al] + 1.5 \times [Ti] + [Mg] + 10 \times [Ta]...(\text{Formel a})$$

$$C\ddot{A}q = [C] + [Si]/24 + [Mn]/6 + [Ni]/40 + [Cr]/5 + [Mo]/4 + [V]/14...(\text{Formel b})$$

in Formeln a und b gibt jedes Element mit [] eine Menge des Elements in Massen-%, bezogen auf die Gesamtmasse des Massivdrahts, an.

2. Der Massivdraht nach Anspruch 1,
wobei die chemische Zusammensetzung, in Massen-%, bezogen auf die Gesamtmasse des Massivdrahts, eines oder mehrere, ausgewählt aus der Gruppe bestehend aus:

Ta: 0,0005% bis 0,1000%;
Cu: 0,1% bis 0,5%;
Cr: 0,01% bis 0,5%;
Mo: 0,01% bis 0,5%;
V: 0,01% bis 0,20%;
Ti: 0,005% bis 0,10%;
Nb: 0,002% bis 0,10%;
B: 0,0003% bis 0,010%;
Mg: 0,10% bis 0,80%; und
Seltenerdmetalle: 0,001% bis 0,050%
enthält.

3. Der Massivdraht nach Anspruch 1 oder 2,
wobei eine Menge der Seltenerdmetalle in dem Massivdraht 0,010% oder weniger, in Massen-%, bezogen auf die Gesamtmasse des Massivdrahts, beträgt.

4. Der Massivdraht nach einem der Ansprüche 1 bis 3,
wobei eine Oberfläche Perfluorpolyetheröl darauf aufweist.

5. Der Massivdraht nach einem der Ansprüche 1 bis 4,
wobei eine Zugfestigkeit 500 MPa bis 1.000 MPa beträgt, die gemäß der Beschreibung bestimmt wird.

6. Der Massivdraht nach einem der Ansprüche 1 bis 5, wobei die Obergrenze des Seltenerdmetall-Gehalts des Massivdrahts 0,001% beträgt.

7. Ein Verfahren zur Herstellung einer Schweißverbindung, umfassend:
Schweißen eines Stahlmaterials unter Verwendung des Massivdrahts nach einem der Ansprüche 1 bis 6.

8. Das Verfahren zur Herstellung einer Schweißverbindung nach Anspruch 7,

wobei das Stahlmaterial

eine Dicke von 6 mm bis 100 mm,
einen Ni-Gehalt von 5,5 Massen-% bis 9,5 Massen-% und
eine gemäß der Beschreibung bestimmte Zugfestigkeit von 660 MPa bis 900 MPa aufweist.

9. Das Verfahren zur Herstellung einer Schweißverbindung nach Anspruch 7 oder 8, wobei das Schweißen ein Lichtbogenschweißen unter Schutzgas ist.

10. Das Verfahren zur Herstellung einer Schweißverbindung nach Anspruch 9,
wobei ein Schutzgas eines aus einem reinen Ar-Gas, einem reinen He-Gas, einem Gas, das Ar und 20 Vol.-% oder weniger $O_2$ und/oder $CO_2$ enthält, und einem Gas, das He und 20 Vol.-% oder weniger $O_2$ und/oder $CO_2$ enthält, ist.

**Revendications**

1. Fil plein comprenant, en tant que composition chimique, en pourcentages en masse par rapport à la masse totale du fil plein :

C : 0,003 % à 0,080 % ;
Si : 0,0010 % à 0,50%;
Mn : 0,050 % à 1,80 % ;
Al : 0,030 % à 0,500 % ;
Ni : 8,0 % à 16,0 % ;
P : 0,0200 % ou moins ;
S : 0,0100 % ou moins ;
O : 0,050 % ou moins ;
Ta: 0 % à 0,1000 % ;
Cu : 0 % à 0,5 % ;
Cr: 0 % à 0,5 % ;
Mo : 0 % à 0,5 % ;
V: 0 % à 0,20 % ;
Ti : 0 % à 0,10 % ;
Nb: 0 % à 0,10 % ;
B : 0 % à 0,010 % ;
Mg : 0 % à 0,80 % ;
REM (éléments des terres rares ETR) : 0 % à 0,050 % ; et
le reste : Fe et impuretés,
dans lequel $\alpha$, défini par la Formule a décrite ci-dessous, vaut de 1,36 % à 5,50 %, et
Ceq, défini par la Formule b décrite ci-dessous, vaut de 0,250 % à 0,520 %,

$$\alpha = 2\times[Mn] + [Al] + 1{,}5\times[Ti] + [Mg] + 10\times[Ta] \qquad \ldots(\text{Formule a})$$

$$Ceq = [C] + [Si]/24 + [Mn]/6 + [Ni]/40 + [Cr]/5 + [Mo]/4 + [V]/14 \ldots(\text{Formule b})$$

dans les Formules a et b, chaque élément avec [] indique la quantité de l'élément en % en masse par rapport à la masse totale du fil plein.

2. Fil plein selon la revendication 1, dans lequel la composition chimique contient, en pourcentages en masse par rapport à la masse totale du fil plein, un ou plusieurs choisis dans le groupe constitué par :

Ta : 0,0005 % à 0,1000 % ;
Cu : 0,1 % à 0,5 % ;
Cr : 0,01 % à 0,5 % ;
Mo : 0,01 % à 0,5 % ;
V : 0,01 % à 0,20 % ;
Ti : 0,005 % à 0,10 % ;
Nb : 0,002 % à 0,10 % ;

B : 0,0003 % à 0,010 % ;
Mg : 0,10 % à 0,80 % ; et
REM (éléments des terres rares ETR) : 0,001 % à 0,050 %.

**3.** Fil plein selon la revendication 1 ou 2, dans lequel la quantité des éléments des terres rares dans le fil solide est de 0,010 % en masse ou moins par rapport à la masse totale du fil plein.

**4.** Fil plein selon l'une quelconque des revendications 1 à 3, dans lequel la surface a une huile de perfluoropolyéther sur celle-ci.

**5.** Fil plein selon l'une quelconque des revendications 1 à 4, dans lequel la résistance à la traction, qui est déterminée conformément à la description, est de 500 MPa à 1 000 MPa.

**6.** Fil plein selon l'une quelconque des revendications 1 à 5, dans lequel la limite supérieure de la teneur du fil plein en éléments des terres rares est de 0,001 %.

**7.** Procédé de fabrication d'un joint soudé, comprenant :
le soudage d'un matériau en acier utilisant le fil plein selon l'une quelconque des revendications 1 à 6.

**8.** Procédé de fabrication d'un joint soudé selon la revendication 7, dans lequel le matériau en acier a

une épaisseur de 6 mm à 100 mm,
une teneur en Ni de 5,5 % en masse à 9,5 % en masse, et
une résistance à la traction, déterminée conformément à la description, de 660 MPa à 900 MPa.

**9.** Procédé de fabrication d'un joint soudé selon la revendication 7 ou 8, dans lequel le soudage est un soudage à l'arc sous protection gazeuse.

**10.** Procédé de fabrication d'un joint soudé selon la revendication 9, dans lequel le gaz de protection est l'un quelconque parmi l'Ar gazeux pur, le He gazeux pur, un gaz contenant de l'Ar et 20 % en volume ou moins de l'un ou des deux parmi $O_2$ et $CO_2$, et un gaz contenant du He et 20 % en volume ou moins de l'un ou des deux parmi $O_2$ et $CO_2$.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010206130 A1
- WO 2015068273 A1
- JP 2008246507 A
- JP H09253860 A
- JP 2008161932 A

**Non-patent literature cited in the description**

- **KAZUO AGUSA ; MASAAKI KOSHO et al.** *KAWA-SAKI STEEL GIHO,* 1982, vol. 14 (3